# EUROPEAN PATENT APPLICATION

(11) **EP 3 376 559 A1**
(43) Date of publication of application: **19.09.2018**
(21) Application number: 18156368.5
(22) Date of filing: 12.02.2018
(51) Int. Cl.: H01M 2/10, H01M 10/0525

(54) **BATTERY MODULE**

(30) Priority: 15.03.2017 CN 201720255030 U
(71) Applicant: Optimum Battery Co., Ltd, Shenzen Guangdong 518118 (CN)
(72) Inventor: WEI, Yuan liang, Shenzhen, Guangdong 518118 (CN); WEN, Ming, Shenzhen, Guangdong 518118 (CN); WU, Shi rong, Shenzhen, Guangdong 518118 (CN); XU, Hao, Shenzhen, Guangdong 518118 (CN); CAI, Lv yi, Shenzhen, Guangdong 518118 (CN); JIA, Zhong gui, Shenzhen, Guangdong 518118 (CN)
(74) Representative: Greaves Brewster LLP

(57) **Abstract**

A battery module includes number of single batteries each single battery having a shell and a cap cover; an anode housing and a cathode housing both having a number of receiving barrels; an anode current collecting board posited on the anode housing having a number of fusible conductive plates; a repairable electrode board positioned on the anode current collecting board; a number of connection member each received in a respective receiving barrel of the cathode housing; an cathode current collecting board posited on the cathode housing; and a number of repairable conductive plates. One end adjacent to the cap cover of each single battery is received in a receiving barrel and the cap cover is soldered to and electrically connected a respective fusible conductive plate. Each repairable conductive plate is configured to be replaced a fusible conductive plates and soldered to the repairable electrode board.

## Description

### BACKGROUND OF THE INVENTION

### Field of the Invention

This invention relates to power batteries, and more particular, to a battery module capable of being quickly repaired.

### Description of the Related Art

Lithium iron phosphate batteries have being rapidly developed in recent years. The lithium iron phosphate batteries are widely employed as powers for vehicles such as cars and buses.

In order to provide a desirable output voltage and output current, a power battery pack employed in a vehicle usually includes a number of single lithium iron phosphate batteries. Generally, a traditional power battery pack includes a number of power battery modules connected in series. Each power battery module includes several single batteries connected in parallel through a pair of current collecting boards. The current collecting boards are respectively positioned at two ends of the several single batteries to electrically connect an anode and a cathode of each single battery. Usually, each single battery is soldered with a screw and a nut at two ends severed as the anode and the cathode respectively. The two ends of the single battery further soldered to the current collecting boards by the screw and the nut for steadily physical and electrical connection. However, when one of the several single batteries is abnormal (for example, damaged or short circuit), it difficult to replace the abnormal single battery and may result in damaging the battery module and increasing the cost.

It is desirable to provide an invention, which can overcome the problems and limitations mentioned above.

### SUMMARY OF THE INVENTION

The present invention is directed to a battery module that substantially obviates one or more of the problems due to limitations and disadvantages of the related art.

In an aspect of the present invention, there is provided a battery module includes a number of single batteries each single battery having a shell and a cap cover; an anode housing and a cathode housing both having a number of receiving barrels; an anode current collecting board posited on the anode housing having a number of fusible conductive plates; a repairable electrode board positioned on the anode current collecting board defining a number of auxiliary holes responding to a fusible conductive plate; a number of connection member each received in a respective receiving barrel of the cathode housing; a cathode current collecting board posited on the cathode housing; and a number of repairable conductive plates. One end adjacent to the cap cover of each single battery is received in a receiving barrel and the cap cover is soldered to and electrically connected a respective fusible conductive plate. Another end of each single battery is received in a receiving barrel of the cathode housing and is clamped by and electrically connected to a respective connection member. Each connection member is attached to and electrically connected to the cathode current collecting board. Each repairable conductive plate is configured to be replaced a fusible conductive plates and soldered to the repairable electrode board.

It is to be understood that both the foregoing general description and the following detailed description are exemplary and explanatory and are intended to provide further explanations of the invention as claimed.

### BRIEF DESCRIPTION OF THE DRAWINGS

FIG. 1 is an isometric, explode view of a battery module, according to an embodiment.
FIG. 2 is an isometric, schematic view of an anode current collecting board, a repairable electrode board, and a repairable conductive plate of the battery module of FIG. 1.
FIG. 3 is an isometric, schematic view of a cathode housing of the power battery module of FIG. 1.
FIG. 4 is a front view of a connection member assembled with a single battery of the power battery module of FIG. 1.
FIG. 5 is partial enlarging schematic of circle A of FIG. 1.
FIG. 6 is partial enlarging schematic of circle B of FIG. 1.

### DETAILED DESCRIPTION OF THE PREFERRED EMBODIMENTS

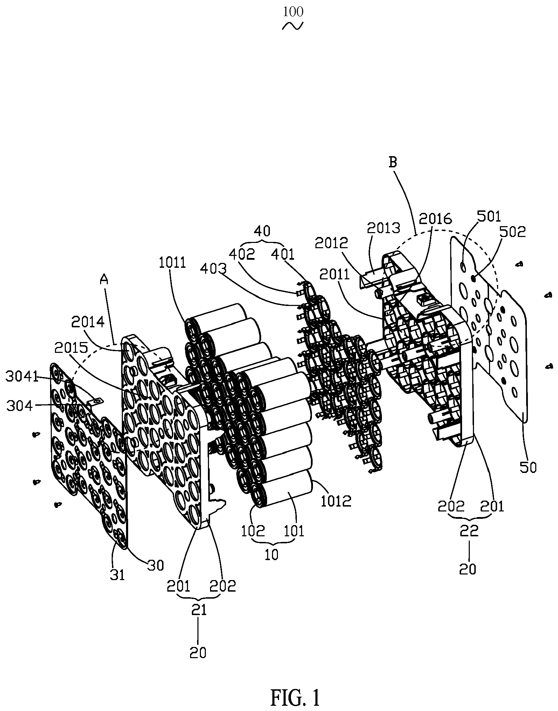

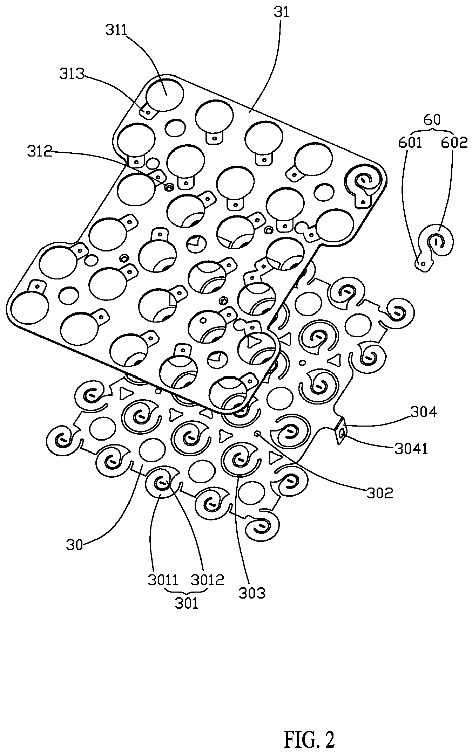

Referring to FIG. 1 and FIG. 2, a battery module 100, according to a preferred embodiment, includes a number of single batteries 10, a pair of housings 20 for receiving the single batteries 10 clamped with each other, an anode current collecting board 30, a number of connection members 40, a cathode current collecting board 50, and a number of repairable conductive plate 60. Each single battery 10 is mounted between the housings 20. The anode current collecting board 30 and the cathode current collecting board 50 are mounted to a respective housing 20. In the embodiment, the anode current collecting board 30 and the single batteries 10 are positioned at two opposite surfaces of one housing 20, and the anode current collecting board 30 electrically connects an anode 1011 of each single battery 10. The cathode current collecting board 50 and the single batteries 10 are positioned at two opposite surfaces of the other housing 20, and the cathode current collecting board 50 electrically connects a cathode 1012 of each single battery 10. Each repairable conductive plate 60 is made of nickel.

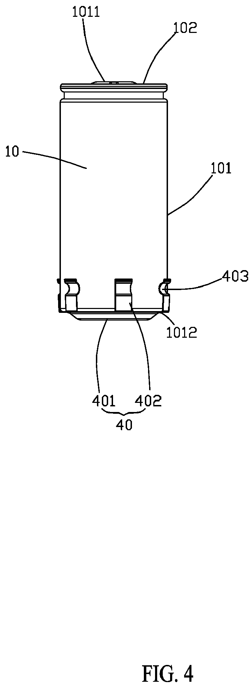

Referring to FIG. 1 and FIG. 4, each single battery 10 includes a shell 101 and a cap cover 102 mounted to one end of the shell 101. In the embodiment, the shell 101 is cylindrical and hollow and includes two ends. One end of the shell 101 defines an opening and the other end away from the cap cover 102 of the shell 101 is enclosed and severed as the cathode 1012. The cap cover 102 is positioned in the opening to enclose the opening and severed as the anode 1011.

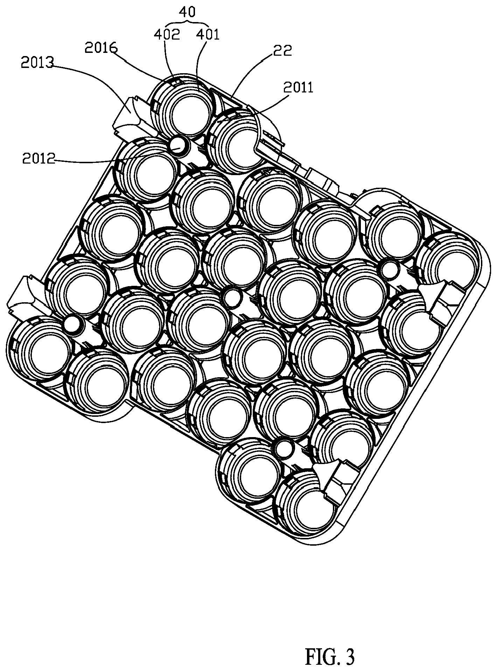

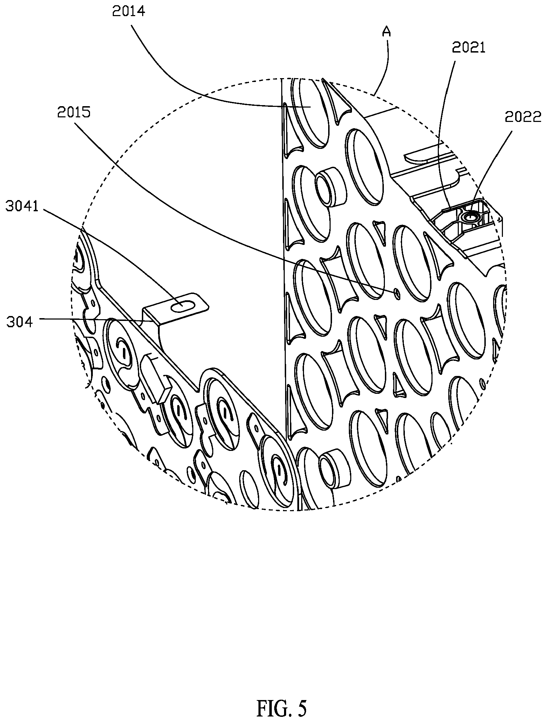

Referring to FIG. 1 and FIG. 3 and FIG. 5, each housing 20 is made of dielectric material such as plastic by injection molding. The pair of housings 20 include an anode housing 21 and a cathode housing 22 generally has the same structure as the anode housing 21. Each of the anode housing 21 and the cathode housing 22 includes a bottom wall 201 and a side wall 202 extending from an edge of the bottom wall 201. The side wall 202 surrounds the bottom wall 201. A number of receiving barrels 2011, a number of positing posts 2012, and a number of fixing posts 2013 extend from one surface of the bottom wall 201 of each of the anode housing 21 and the cathode housing 22. The number of the receiving barrels 2011 of each of the anode housing 21 and the cathode housing 22 corresponds to the number of the single batteries 10. Each receiving barrel 2011 is configured to receive one end of the single battery 10. Each positing post 2012 of the anode housing 21 is configured to align with a respective positing post 2012 of the cathode housing 22 when the anode housing 21 and the cathode housing 22 are assembled together. Each fixing post 2013 of the anode housing 21 is configured to clamp with a respective fixing post 2013 of the cathode housing 22 when the anode housing 21 and the cathode housing 22 are assembled together. The bottom wall 201 of each of the anode housing 21 and the cathode housing 22 defines a number of first through holes 2014 passing the bottom wall 201. The number of the first through holes 2014 of each of the anode housing 21 and the cathode housing 22 corresponds to the number of the receiving barrels 2011. Each receiving barrel 2011 surrounds a respective first through hole 2014. In the embodiment, each receiving barrel 2011 is hollow cylindrical and each first through hole 2014 is circular and coaxial with a respective receiving barrel 2011.

The bottom wall 201 of each of the anode housing 21 and the cathode housing 21 also defines several first screw holes 2015 passing through the bottom wall 201. The anode current collecting board 30 is mounted to a surface of the bottom wall 201 opposite to the receiving barrels 2011 of anode housing 21 by the first screw holes 2015. The cathode current collecting board 50 is mounted to a surface of the bottom wall 201 opposite to the receiving barrels 2011 of the cathode housing 22 by the first screw holes 2015. The pair of housings 20 are engaged with each other by the positing posts 2012 and the fixing posts 2013. Each receiving barrel 2011 of the anode housing 21 is configured for receiving one end of the single battery 10 adjacent to the cap cover 102. Each receiving barrel 2011 of the cathode housing 22 is configured for receiving one end of the single battery 102 away from the cap cover 102. A mounting protrusion 2021 extends from an outer surface of the side wall 202 of each of the anode housing 21 and the cathode housing 22. The mounting protrusion 2021 is substantially cubid and defines a second screw hole 2022. An inner surface of each receiving barrel 2011 of the cathode housing 22 defines several leading grooves 2016. The number of the leading grooves 2016 of each barrel 2011 of the cathode housing 22 is at least two. In the embodiment, the number of the leading grooves 2016 of each barrel 2011 of the cathode housing 22 is four.

Referring to FIG. 1 and FIG. 2, the anode current collecting board 30 is mounted to the bottom wall 201 of the anode housing 20 and opposite to the single batteries 10. The anode current collecting board 30 includes a number of fusible conductive plates 301 each corresponding to a cap cover 102 of the single battery 10. The anode current collecting board 30 defines a number of first fixing holes 302 each corresponding to first screw hole 2015 of the bottom wall 201 of the anode housing 21. In specific, the anode current collecting board 30 is made of metal such as nickel and integrally formed by stamping and defines a number of the second through holes 303, each fusible conductive plate 301 extend inwardly to a center of a respective second through hole 303 from an edge of the second through hole 303. Each second through hole 303 is circular and corresponds to a first through hole 2014 of the anode housing 21. The cap cover 102 of each single battery 10 passes a respective first through hole 2014 of the anode housing 21 and is soldered to a respective fusible conductive plate 301. The fusible conductive plate 301 includes a first connection portion 3011 connecting to the edge of the second though hole 303 and a second connection portion 3012 connecting to the first connection portion 3011. The first connection portion 3011 is arch and coaxial with second through hole 303. The second connection portion 3013 is circular and coaxial with the second through hole 303. A width of the first connection portion 3011 is less than a width of the second connection portion 3012. The anode current collecting board 30 includes a mounting portion 304 extending from an edge of the anode current collecting board 30. The mounting portion 304 responds to the mounting protrusion 2021 and defines a second fixing hole 3041. The anode current collecting board 30 can be fixed to the anode housing 21 by a screw passing the second screw hole 2022 and the second fixing hole 3041.

The battery module 100 includes a repairable electrode board 31 positioned on the anode current collecting board 30 away from the bottom wall 201 of the anode housing 21. The anode current collecting board 30 is positioned between the repairable electrode board 31 and the bottom wall 201 of the anode housing 21. The repairable electrode board 31 defines a number of auxiliary holes 311 and a number of third fixing holes 312. Each auxiliary hole 311 is circular and responds a second the through hole 303 and a fusible conductive plate 301. Each third fixing hole 312 is circular and responds to a first screw hole 2015 and a first fixing hole 302. The repairable electrode board 31 defines a number of auxiliary grooves 313 on one surface opposite to the anode current collecting board 30. Each auxiliary groove 313 is generally rectangular and is positioned at one side of a respective auxiliary hole 311 and communicates the respective auxiliary hole 311. Each auxiliary hole 311 is configured to receive a repairable conductive plate 60. In the embodiment, the repairable electrode board 31 and the anode current collecting board 30 are fixed to the anode housing 21 by each screw passing through a third fixing hole 312, a respective first fixing hole 302, and a respective first screw hole 2015.

Referring to FIG. 1 and FIG. 3, and FIG. 4, each connection member 40 is connected to the cathode 1012 of the single battery 10 and attached to and electrically connected to the cathode current collecting board 50. Each connection member 40 is made of metal such as copper and includes a main portion 401 and several connecting arms 402. The main portion 401 is substantially a circular plate and responds to a receiving barrel 2011 of the cathode housing 22. The connecting arms 402 are rectangular and perpendicularly extend from an edge of the main portion 401. Each connecting arm 402 responds to a leading groove 2016. The main portion 401 is configured to be attached to the cathode current collecting board 50 and attached to the cathode of the single battery 10. In the embodiment, the number of the connecting arms 402 is four and the connecting arms 402 are arranged in a circle and each connecting arm 402 includes a contact portion 403 protruding toward a center axis of the main portion 401. The contact portion 403 is configured for contacting the shell (101) of the single battery (10). The number of the connection member 40 is equal to the number of the single batteries 10.

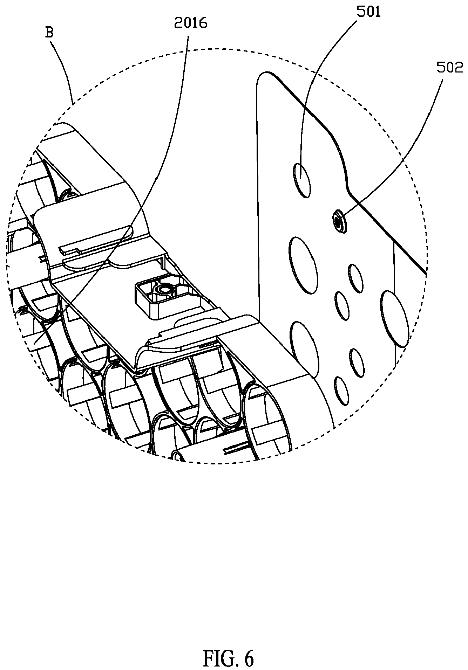

Referring to FIG. 1 and FIG. 6, the cathode current collecting board 50 is mounted to the bottom wall 201 of the cathode housing 22 and opposite to the receiving barrels 2011 of the cathode housing 22. The cathode current collecting board 50 defines a number of third through holes 501 and a number of fourth fixing holes 502. Each third through hole 501 responds to a first through hole 2014 of the cathode housing 22 and responds to the main portion 401 of a connection member 40. The third through holes 501 and the first through holes 2014 of the cathode housing 22 are circular, a diameter of each third through 501 is less than a diameter of 2014 of the cathode housing 22. Each fourth fixing hole 502 responds to a first screw hole 2015 of the cathode housing 22. The cathode current collecting board 50 is mounted to the bottom wall 201 of the cathode housing 22 and opposite to the receiving barrels 2011 of the cathode housing 22 by corresponding screw passing through each fourth fixing hole 502 and a respective first screw hole 2015.

Referring to FIG. 2, each repairable conductive plate 60 is configured to be replaced a fusible conductive plates 301 when the fusible conductive plates 301 fuses for the single battery 10 which the fusible conductive plates 301 soldered to is abnormal. The repairable conductive plate 60 includes a soldering portion 601 and a working portion 602 extending from an edge of the soldering portion 601. The soldering portion 601 is generally a rectangular plate and responds to a shape of an auxiliary groove 313. The working portion 602 has a structure the same as the fusible conductive plates 301. The working portion 602 is configured to be soldered to the cap cover 102 of the single battery 10 through a respective auxiliary hole 311.

When assembling, one end adjacent to the cap cover 102 of each single battery 10 is inserted into a respective receiving barrel 2011 of the anode housing 21, the anode current collecting board 30 is fixed to the anode housing 21 by a screw passing the second screw hole 2022 and the second fixing hole 3041. The cap cover 102 of each single battery 10 passes a respective first through hole 2014 of the anode housing 21 and is soldered to and electrically connected to a respective fusible conductive plate 301. The repairable electrode board 31 positioned on and electrically connected to the anode current collecting board 30 away from the bottom wall 201 of the anode housing 21. The repairable electrode board 31 and the anode current collecting board 30 are fixed to the anode housing 21 by each screw passing through a respective third fixing hole 312, a respective first fixing hole 302, and a respective first screw hole 2015. Each connection member 40 is received in a receiving barrel 2011 of the cathode housing 22 with each connecting arm 402 being received in a leading groove 2016. The other end away from the cap cover 102 of each single battery 10 is inserted into a respective receiving barrel 2011 of the cathode housing 22 and is clamped by the connecting arms 402 of the connection member 40, the connecting arms (402) clamp the another end away from the cap cover (102) of each single battery (10) and electrically connected to the shell (101). The cathode 1012 of the single battery is attached to and electrically connected to the main portion 401 of the connection member 40. The contact portion 403 of the connecting arm 402 contact with the shell (101) of the single battery 10. Each positing post 2012 of the anode housing 21 is aligned with a respective positing post 2012 of the cathode housing 22. Each fixing post 2013 of anode housing 21 is clamped with a respective fixing post 2013 of the cathode housing 22. The cathode current collecting board 50 is mounted to the bottom wall 201 of the cathode housing 22 and opposite to the receiving barrels 2011 of the cathode housing 22. The cathode current collecting board 50 is mounted to the bottom wall 201 of the cathode housing 22 and opposite to the receiving barrels 2011 of the cathode housing 22 by corresponding screw passing through each fourth fixing hole 502 and a respective first screw hole 2015 of the cathode housing 22. Each third through hole 501 is coaxial with a respective first through holes 2014 of the cathode housing 22. Each connection member 40 passes through the first through hole 2014 of the cathode housing 22 and is attached to and electrically connected to the cathode current collecting board 50. The main portion 401 of each connection portion contacts the cathode current collecting board 50 and enclosed a respective third through hole 501.

When the fusible conductive plates 301 fuses for the single battery 10 which the fusible conductive plates 301 soldered to is abnormal. In one embodiment, the single battery 10 is abnormal can be short circuit. The anode housing 21 and the cathode housing 22 are separated from each other. The fused fusible conductive plates 301 is damaged and removed through the auxiliary hole 311 corresponding to the fused fusible conductive plates 301. The abnormal single battery 10 is pulled out from the receiving barrel 2011 of the anode housing 21 and the cathode housing 22 and replaced by a new single battery 10. A repairable conductive plate 60 is positioned into the auxiliary hole 311 corresponding to the fused fusible conductive plates 301 with the soldering portion 601 being received in the auxiliary groove 313 and the working portion 602 being received in the auxiliary hole 311. Then the working portion 602 is soldered to the cap cover 102 of the new single battery 10. Then the anode housing 21 and the cathode housing 22 are assembled together again.

It is very convenient to replace the abnormal single battery 10 and can avoid to damage the whole battery module 100.

It will be apparent to those skilled in the art that various modification and variations can be made in the multicolor illumination device and related method of the present invention without departing from the spirit or scope of the invention. Thus, it is intended that the present invention cover modifications and variations that come within the scope of the appended claims and their equivalents.

## Claims

1. A battery module (100), comprising:
a number of single batteries (10), each single battery (10) comprising a shell (101) and a cap cover (102) mounted to one end of the shell (101); the cap cover 102 being severed as an anode (1011) of the single battery (10), one end away from the cap cover (102) of the shell (101) being sever a cathode (1012) of the single battery (10);
an anode housing (21) and a cathode housing (22); each of the anode housing (21) and the cathode housing (22) comprising a bottom wall (201); a number of receiving barrels (2011) extending from one surface of the bottom wall 201 of each of the anode housing (21) and the cathode housing (22); the bottom wall (201) of each of the anode housing (21) and the cathode housing 22 defining a number of first through holes (2014); each receiving barrel (2011) surrounding a respective first through hole (2014);
an anode current collecting board (30) posited on the bottom wall (201) of the anode housing (21) opposite to the receiving barrels (2011) of the anode housing (21); the anode current collecting board (30) comprising a number of fusible conductive plates (301);
a repairable electrode board (31) positioned on the anode current collecting board 30 away from the bottom wall (201) of the anode housing (21); the repairable electrode board (31) defining a number of auxiliary holes (311) responding to a fusible conductive plate (301);
a number of connection members (40) each received in a respective receiving barrel (2011) of the cathode housing (22);
an cathode current collecting board (50) posited on the bottom wall (201) of the cathode housing (22) opposite to the receiving barrels (2011) of the cathode housing (22); and
a number of repairable conductive plates (60);
wherein one end adjacent to the cap cover (102) of each single battery (10) is received in a receiving barrel (2011) and the cap cover (102) passes through the first through hole (2014) of the anode housing (21), the cap cover (102) is soldered to and electrically connected a respective fusible conductive plate (301); another end away from the cap cover (102) of each single battery (10) is received in a receiving barrel (2011) of the cathode housing (22) and is clamped by and electrically connected to a respective connection member (40), each connection member (40) passes through the first through hole (2014) of the cathode housing (22) and is attached to and electrically connected to the cathode current collecting board (50); wherein each repairable conductive plate is configured to be replaced a fusible conductive plates (301) and soldered to the repairable electrode board (31) through a respective auxiliary holes (311).

2. The battery module (100) of claim 1, wherein the anode current collecting board (30) defines a number of the second through holes (303), each fusible conductive plate 301 extend inwardly to a center of a respective second through hole (303) from an edge of the second through hole (303); each second through hole (303) is circular and corresponds to a first through hole (2014) of the anode housing (21).

3. The battery module (100) of claim 2, wherein the fusible conductive plate (301) comprises a first connection portion (3011) connecting to the edge of the second though hole (303) and a second connection portion (3012) connecting to the first connection portion (3011); the first connection portion (3011) is arch and coaxial with second through hole (303); the second connection portion (3013) is circular and coaxial with second through hole (303); a width of the first connection portion (3011) is less than a width of the second connection portion (3012).

4. The battery module (100) of claim 3, wherein the repairable electrode board (31) defines a number of auxiliary grooves (313) on one surface opposite to the anode current collecting board (30); each auxiliary groove (313) is positioned at one side of a respective auxiliary hole (311) and communicates the respective auxiliary hole (311); the repairable conductive plate (60) comprises a soldering portion (601) and a working portion (602) extending from an edge of the soldering portion (601); the soldering portion (601) responds to a shape of an auxiliary grooves (313) and is configured to be received in the auxiliary grooves (313); the working portion 602 has a structure the same as the fusible conductive plate (301).

5. The battery module (100) of claim 4, wherein the bottom wall 201 of each of the anode housing (21) and the cathode housing (22) also defines several first screw holes (2015) passing through the bottom wall (201); the anode current collecting board (30) defines a number of first fixing holes (302) each corresponding to first screw hole (2015); each of the anode housing (21) and the cathode housing (22) further comprises a side wall (202) extending from an edge of the bottom wall (201); a mounting protrusion (2021) extends from the side wall (202) of each of the anode housing (21) and the cathode housing (22); the mounting protrusion (2021) defines a second screw hole (2022); the anode current collecting board (30) comprises a mounting portion (304) extending from an edge of the anode current collecting board (30); the mounting portion (304) responds to the mounting protrusion (2021) and defines a second fixing hole (3041); the anode current collecting board (30) is fixed to the anode housing (21) by the second screw hole (2022) and the second fixing hole (3041).

6. The battery module (100) of claim 5, wherein the repairable electrode board (31) defines a number of third fixing holes (312); the repairable electrode board (31) and the anode current collecting board (30) are fixed to the anode housing (21) by a respective third fixing hole (312), a respective first fixing hole (302), and a respective first screw hole (2015).

7. The battery module (100) of claim 1, wherein each connection member (40) comprises a main portion (401) and several connecting arms (402) extending from an edge of the main portion (401); the cathode (1012) of the single battery (10) is attached to and electrically connected to main portion (401), the main portion (401) is attached to and electrically connected the cathode current collecting board (50); the connecting arms (402) clamp the another end away from the cap cover (102) of each single battery (10) and electrically connected to the shell (101).

8. The battery module (100) of claim 7, wherein the main portion (401) is a circular plate and responds to a receiving barrel (2011) of the cathode housing (22); the connecting arms (402) are rectangular and perpendicularly extend from an edge of the main portion (401); the connecting arms (402) are arranged in a circle and each connecting arm (402) comprises a contact portion (403) protruding toward a center axis of the main portion (401) for contacting the shell (101) of the single battery (10).

9. The battery module (100) claim 8, wherein an inner surface of each barrel 2011 of the cathode housing 22 define several leading grooves (2016); each connecting arm (402) of the connection member (40) is received in a leading groove (2016) of each barrel (2011) of the cathode housing (22).

10. The battery module (100) claim 9, wherein the number of the leading grooves (2016) of each barrel (2011) is four, the number of connecting arms (402) of each connection member is four.

11. The battery module (100) claim 6, wherein the cathode current collecting board (50) defines a number of third through holes (501); each third through hole (501) responds to a first through hole (2014) of the cathode housing (22) and responds to the main portion (401) of a connection member (40); the third through holes (501) and the first through holes (2014) of the cathode housing (22) are circular, a diameter of each third through (501) is less than a diameter of (2014) of the cathode housing (22), and each third through hole (501) is coaxial with a respective first through holes (2014) of the cathode housing (22).

12. The battery module (100) of claim 11, wherein the cathode current collecting board (50) defines a number of fourth fixing holes (502); the cathode current collecting board (50) is mounted to the bottom wall (201) of the cathode housing (22) and opposite to the receiving barrels (2011) of the cathode housing (22) each fourth fixing hole (502) and a respective first screw hole (2015) of the cathode housing (22).
